# EUROPÄISCHE PATENTSCHRIFT

(11) **EP 1 411 259 B1**
(45) Veröffentlichungstag und Bekanntmachung des Hinweises auf die Patenterteilung: **29.11.2006**
(21) Anmeldenummer: 03022409.1
(22) Anmeldetag: 07.10.2003
(51) Int. Cl.: F16D 23/06, F16D 23/04

(54) **Schiebemuffe**
Sliding sleeve
Manchon coulissant

(30) Priorität: 15.10.2002 DE 10247951
(43) Veröffentlichungstag der Anmeldung: 21.04.2004
(73) Patentinhaber: Schaeffler KG, 91074 Herzogenaurach (DE)
(72) Erfinder: Jansen, Manfred, 91085 Weisendorf (DE); Sassrath, Hans-Gerhardt, 91056 Erlangen (DE); Bössner, Ralf, 91217 Hersbruck (DE); Kalthoff, Ralph, 91054 Erlangen (DE); May, Kristina, 92237 Sulzbach-Rosenberg (DE); Spalthoff, Eberhard, 33615 Bielefeld (DE); Röckelein, Ernst, 96138 Burgebrach (DE); Badum, Thomas, 91315 Höchstadt (DE)

(56) Entgegenhaltungen:
- DE-A- 10 033 764
- DE-A- 10 053 031
- DE-A- 19 820 654
- DE-A- 19 912 131
- DE-A- 19 917 230

## Beschreibung

### Gebiet der Erfindung

Die Erfindung betrifft eine Schiebemuffe mit einer durch Kaltumformen eines Blechstreifens hergestellten Verzahnung und mit einer Schaltgabelführung, wobei die Verzahnung mit radial nach innen hervorstehenden Zähnen an einer ringförmigen Basis des ringförmig um eine Rotationsachse gebogenen Blechstreifens ausgebildet ist und wobei die Schaltgabelführung eine um die Rotationsachse sowie um die Basis verlaufende Ringnut ist.

### Hintergrund der Erfindung

Eine derartige Schiebemuffe ist in DE 198 20 654 A1 beschrieben. Die Verzahnung der Schiebemuffe ist aus einem Blechstreifen gebildet, der in seinem Ausgangszustand flach vorliegt und in den im flachen Zustand das Profil der Verzahnung gewalzt bzw. geprägt ist. Die Zähne der Verzahnung stehen aus einer flachen Basis des profilierten Blechstreifens hervor. Die Verzahnung weist die bekannten Merkmale einer Verzahnung an Schiebemuffen, wie dachartig angespitzte Zähne, hinterschnittene Zahnflanken, radiale Rastvertiefungen oder Ähnliches auf. Die Zähne der Verzahnung weisen nach dem Biegen radial nach innen auf die Rotationsachse der Schiebemuffe zu. Die nicht mit der Verzahnung profilierte Seite weist radial nach außen, so dass die Basis außen eine oder mehrere durch Abstufungen der Außendurchmesser hervorgerufene im wesentlichen zylindrische Mantelfläche(n) oder durch andere beliebige geometrische Formen bestimme Flächen aufweist, wobei jedoch die Basis in radialer Richtung auch funktionsbedingt mittels Durchgangslöchern durchbrochen oder durch Einformungen in die hohlzylindrische Form der Basis unterbrochen sein kann. Nach innen ist die Basis durch eine gedachte zylindrische Mantelfläche begrenzt, deren Durchmesser durch den Durchmesser des Fußkreises der Verzahnung vorgegeben ist. Unter Verzahnung und Zähnen sind in der Erfindung alle Arten und Ausführungen von Keilen, Keilprofilen, Klauen, Kerbverzahnungen usw. zu verstehen, die für eine formschlüssige Verbindung zum Übertragen von Drehmomenten geeignet sind.

Der Blechstreifen ist nach dem Profilieren kreisrund gebogen sowie dabei an seinen Schnittkanten zusammengeführt. Die Schnittkanten sind aneinander befestigt, so dass ein umfangsseitig geschlossener und belastbarer Ring entsteht. Dazu sind die Enden des Blechstreifens miteinander verschweißt. Die Verbindung der Schnittkanten ist aufgrund der in der Synchronkupplung zu übertragenden Drehmomente hoch belastet. Der Aufwand für das Herstellen einer sicheren Verbindung ist deshalb hoch.

Die Schaltgabelführung ist durch eine um die Rotationsachse verlaufende und beidseitig längs der Rotationsachse begrenzte Ringnut gebildet. Die Ringnut ist nach dem Stand der Technik durch die Flanken von zwei längs der Rotationsachse mit Abstand zueinander sowie parallel zueinander und außen auf der Basis befestigten Lochscheiben begrenzt.

Ein Ziel der Fachwelt ist es, die Getriebe und damit deren Einzelteile mit hoher Lebensdauer zu versehen, so klein wie möglich zu bauen und kostengünstig herzustellen. Mit einer Synchronkupplung und damit einer Schiebemuffe sind teils hohe Drehmomente zu übertragen. Die Verzahnung und die Basis sind deshalb robust zu gestalten, so dass das anfangs erwähnte Ziel, die Getriebe so klein wie möglich zu bauen, oftmals nicht in dem Maße verwirklicht werden kann wie es gewünscht ist.

### Zusammenfassung der Erfindung

Die Aufgabe der Erfindung ist es daher, eine robuste und kostengünstig herstellbare Schiebemuffe mit einer Verzahnung an einem Blechstreifen zu schaffen.

Diese Aufgabe ist nach dem Gegenstand des kennzeichnenden Teils des Anspruchs 1 dadurch gelöst, dass die Schiebemuffe einen einteiligen, kaltgeformten sowie umfangsseitig geschlossenen Stützring aus Stahl aufweist. Der Stützring ist auf der Basis befestigt. Dabei ist die Basis mittels eines hohlzylindrischen Abschnittes des Stützringes mit einer konstanten Wanddicke außen zu mindestens zu 4/5 längs der Rotationsachse abgedeckt sowie umfangsseitig vollständig umgriffen. Der hohlzylindrische Abschnitt ist außen zumindest durch eine die Ringnut im Nutgrund begrenzende zylindrische äußere Mantelfläche begrenzt. Innen umgreift der hohlzylindrische Abschnitt die Basis der Verzahnung an ihrer äußeren Mantelfläche. Die Wanddicke des Abschnittes entspricht mindestens der größten radialen Wandstärke der Basis. Die größte radiale Wandstärke der Basis ist die halbe Differenz aus dem größten Außendurchmesser an dem Blechstreifen und dem kleinsten Durchmesser des Fußkreises der Verzahnung. Weiterhin ist mit Anspruch 1 vorgesehen, dass die Schaltgabelführung eine in den Stützring geformte sowie radial nach außen geöffnete Ringnut ist.

Der Stützring umfasst außen umfangsseitig vollständig sowie längs der Rotationsachse wenigstens 4/5 der Breite der Basis. Die Verzahnung ist mittels des am Umfang geschlossen ausgeführten Stützringes bandagiert und stützt sich unter hohen Belastungen an diesem ab. Dazu weist der Stützring den hohlzylindrischen Abschnitt auf, der die Basis zu mindestens 4/5 bandagenartig umgreift. Dem Abschnitt schließt sich radial außen wenigstens ein zumeist rotationssymmetrisch ausgebildeter Wandabschnitt des Stützringes an, in den die Ringnut für die Schaltgabelführung eingebracht ist. Das sich längs der Ringnut anschließende und sich längs vorzugsweise bis zu den Stirnseiten der Verzahnung erstreckende Material des Stützringes unterstützt die Stützwirkung. Es ist im Zusammenhang mit der vorgenannten Ausgestaltung der Erfindung vorgesehen, dass radial zwischen der Ringnut der Schaltgabelführung ein ringförmiger Abschnitt mit einer Wanddicke von mindestens 2,5 mm an dem Stützring verbleibt. Weiter ist vorgesehen, dass der ringförmige Abschnitt an dem Stützring eine Wanddicke aufweist, die mindestens dem 1,4-fachen Wert der geringsten radialen Wandstärke der ringförmigen Basis entspricht. Die geringste radiale Wandstärke der Basis ist dabei die halbe Differenz aus dem kleinsten Außendurchmesser der Basis und aus dem größten Durchmesser des Fußkreises der Verzahnung. Mit derartigen Verhältnissen der Wandstärken bzw. Wanddicken zueinander, ist eine Stützwirkung des Stützringes über die gesamte Breite des Stützringes abgesichert, ohne dass diese Wirkung durch die in den Stützring eingebrachte Ringnut an dem Abschnitt geschwächt ist.

Die Schiebemuffe gemäß Erfindung ist sehr kompakt ausgeführt. Es sind Schiebemuffen mit kleinen Außendurchmessern und hoher Stabilität herstellbar, da ein Großteil des stützenden Materials des Stützringes sich längs an die Ringnut anschließt und somit, verglichen mit dem bisherigen Stand der Technik kaum oder nur geringfügig mehr radialer Bauraum durch die Schiebemuffe beansprucht ist. Die Wandstärke der Basis ist deshalb in einer weiterführenden Ausgestaltung der Erfindung auf ein geringes für die Herstellung der Verzahnung notwendiges Maß reduziert. Dabei ist die Zahnhöhe der höchsten Zähne der Verzahnung mindestens genauso groß oder größer wie die geringste radiale Wandstärke der Basis. Die Zahnhöhe ist dabei die halbe Differenz aus dem größten Durchmesser des Fußkreises und aus dem kleinsten Durchmesser des Kopfkreises des höchsten der Zähne der Verzahnung. In einer weiteren Ausgestaltung der Erfindung ist zusätzlich zu dem vorgenannten Verhältnis der Zahnhöhe zu der Wandstärke der Basis auch das vorweg beschriebene Verhältnis der Wanddicken des ringförmigen Abschnittes an dem Stützring zu der Wandstärke der Basis berücksichtigt.

Die Verzahnung ist in den Stützring eingepresst oder alternativ eingelegt und dabei mit dem Stützring verschweißt. Der Presssitz ist alternativ durch Schweißen oder Verstemmen der Teile aneinander gesichert. Die Schweißnaht bzw. die Schweißnähte der Schweißverbindung(en) verlaufen bevorzugt in Umfangsrichtung umlaufend sowie vorzugsweise an einer oder an beiden in die Längsrichtung(en) der Rotationsachse gewandte(n) Stirnseite(n) der Schiebemuffe. Die Schweißverbindungen sind Verbindungen aus der Anwendung aller geeigneten Schweißverfahren, jedoch insbesondere aus der Anwendung des Laserschweißens und des Kondensator-Entladungsschweißens.

Unzulässige Verformungen der Schiebemuffe unter hoher Last sind vermieden, da der im Vergleich zu der Verzahnung relativ starr ausgeführte Stützring die Verzahnung tangential, radial und in Umfangsrichtung stützt. Die oben erwähnte Verbindung der aufeinander zugebogenen Enden an den Schnittkanten des Blechstreifens ist tangential oder in Umfangsrichtung entlastet. Dazu sind die Enden des Blechstreifens vorzugsweise mittels Fügetechniken wie durch einen Kraft-Formschluss in einer oder mehrerer sogenannter Schlossverbindung(en) oder mittels Schweißverbindung(en) bzw. mittels Kombinationen dieser Techniken aneinander befestigt. Die Schlossverbindung ist durch das tangentiale bzw. umfangsseitige Einhaken formschlüssig miteinander korrespondierender Elemente an den Enden des Blechstreifens gebildet (z. B. in der Form einer Schwalbenschwanz-Verbindung). Diese Verbindungen sind ggf. durch Prägungen oder Verstemmen bzw. durch Schweißen gesichert. Derartige Verbindungen entfallen alternativ dazu ganz. Der kreisrund gebogene Blechstreifen mit der Verzahnung ist in diesem Fall in den Stützring eingepresst, eingelegt und/oder mit dem Stützring verschweißt bzw. verstemmt, ohne dass die aufeinander zu gebogenen Enden des Stützringes vorher aneinander befestigt sind. Die Enden liegen nur auf Stoß aneinander. Die Werkzeuge für den Zuschnitt des Blechstreifens sind vereinfacht, der Arbeitsgang des Verbindens der Enden entfällt in diesem Fall generell.

Der Stützring ist ein Umformteil das kalt umgeformt, vorzugsweise durch Walzen oder Rollieren, hergestellt ist. Vor dem Umformen sind die kalt zu bearbeitenden Rohlinge maximal auf eine Temperatur bis zu 120°C erwärmt. Der Rohling, aus dem der Ring mit einer Schaltgabelführung gewalzt ist, ist bevorzugt ein Schmiederohling. Nach dem Formen ist jede der die Ringnut der Schaltgabelführung begrenzenden Seitenwand um einen Winkel von 2° bis 3° von einer radialen und der Symmetrieebene der Nut gleichen oder parallelen Eben seitlich zur Stirnseite der Schiebemuffe weg geneigt, d. h. der Querschnitt der Ringnut nimmt im Längsschnitt der Schiebemuffe betrachtet in radiale Richtung nach außen zu. Diese Schrägstellung der Wände verbleibt an der fertigen Schiebemuffe und trägt ggf. zu einer sinnvollen Führung und Zentrierung der in die Ringnut eingreifenden Enden der Schaltgabeln bei. Alternativ dazu sind die Wände so spanabhebend nachgearbeitet, dass sie zueinander parallel ausgerichtet sind.

Die Rohlinge sind bevorzugt aus Stahl mit den Werkstoffbezeichnungen C15, 100Cr6 oder 16MnCr5 hergestellt. Alternativ dazu sind alle kaltumformbaren Stähle einsetzbar. Eine Ausgestaltung der Erfindung sieht vor, dass der Rohling ringförmig ausgebildet ist und dass der größte, die Außenmantelfläche des Rohlings beschreibende, Außendurchmesser an dem Rohling kleiner ist als der größte Außendurchmesser der Außenmantelfläche des aus dem Rohling hergestellten fertigen Stützringes.

Der zunächst kaltgewalzte Ring ist ggf. im Anschluss an den Formprozess an seiner nach innen weisenden zylindrischen Mantelfläche durch spanabhebende Verfahren oder durch Kalibrieren passgenau für den Sitz auf der Verzahnung bearbeitet.

Die Verschleißfestigkeit der Schiebemuffe ist durch Härten oder Nitrocarburieren erhöht. Die Einzelteile der Schiebemuffe sind getrennt gehärtet oder die Schiebemuffe ist komplett gehärtet. Dabei sind sowohl Verfahren zum Durchhärten als auch zum Einsatzhärten einsetzbar. Alternativ dazu ist an der Schaltgabelführung nur die Ringnut für den Eingriff der Schaltgabel, z. B. durch Induktionshärten, gehärtet. Das weitere Material der Schaltgabelführung ist dann nicht gehärtet. Die gesamte Führung ist somit formstabil gehalten. Die Ringnut ist entweder vor oder nach dem Härten durch spanabhebende Nacharbeit oder Kalibrieren auf Maß gebracht. Die Schiebemuffe innen und auch außen, insbesondere die Ringnut der Schaltgabelführung, ist alternativ durch Hartdrehen nach dem Härten der Führung bzw. der Schiebemuffe bearbeitet.

Die Schiebemuffe ist durch Fügen der Einzelteile der Schaltgabelführung und ggf. dem anschließenden Härten im wesentlichen fertiggestellt. Alternativ dazu ist vorgesehen, dass die Zähne der Verzahnung an der Schiebemuffe nach dem Befestigen der Schaltgabelführung auf der Verzahnung durch Kalibrieren und dabei unter Umständen auch nach dem Härten maßgenau zueinander ausgerichtet sind.

### Kurze Beschreibung der Zeichnungen

Die Erfindung ist nachfolgend anhand von Ausführungsbeispielen näher erläutert. Es zeigen:
- Figur 1: ein Ausführungsbeispiel einer Schiebemuffe gemäß Erfindung,
- Figur 2: einen Längsschnitt durch die Schiebemuffe nach Figur 1 entlang der Linie II-II,
- Figuren 3a bis 3c: eine vergrößerte Darstellung des Details Z aus Figur 2 mit alternativen Gestaltungen des Stützringes und
- Figur 4: die zeichnerische Gegenüberstellung der Abmessungen eines fertigen Stützringes zu den Abmessungen des Rohlings für die Herstellung des Stützringes.

### Detaillierte Beschreibung der Zeichnungen

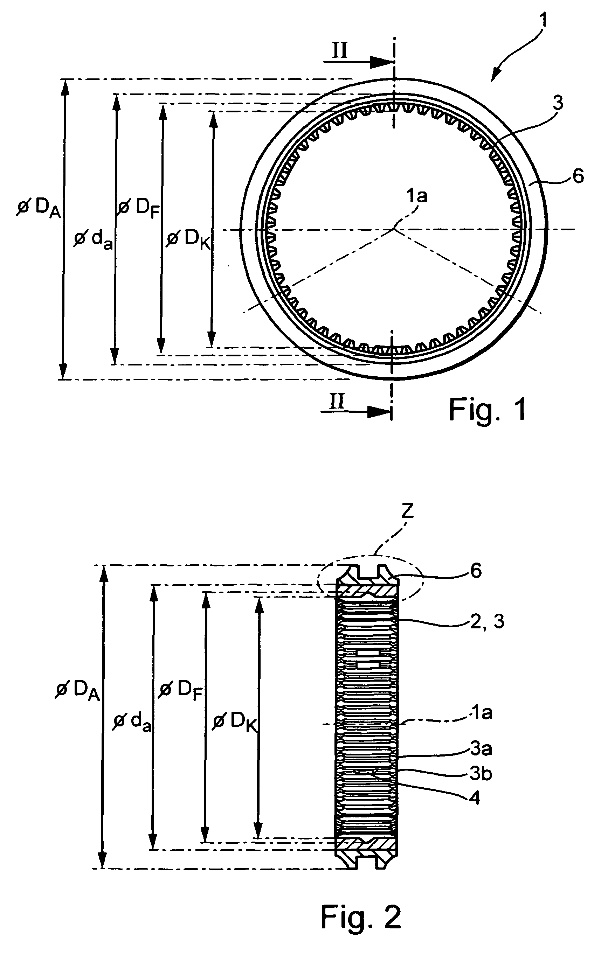

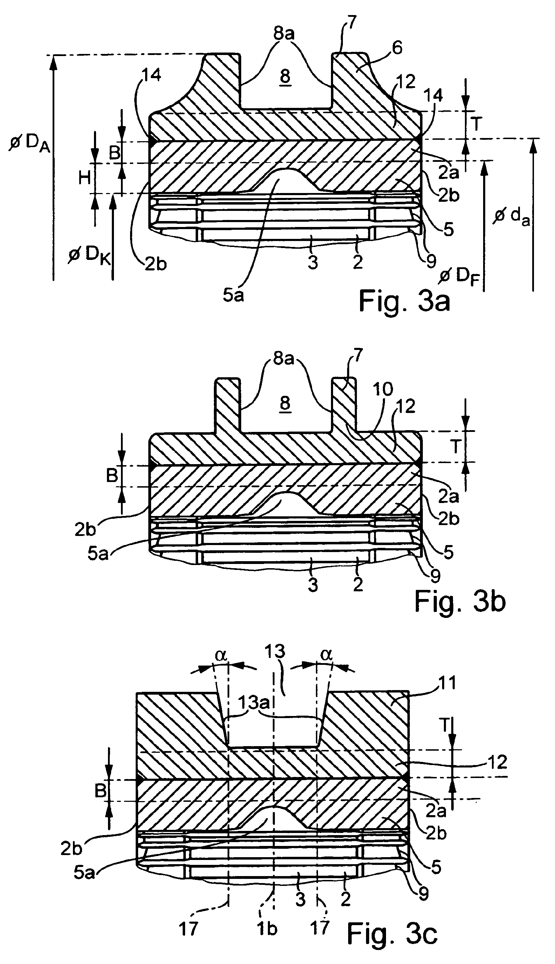

Die Figuren 1 und 2 zeigen eine Schiebemuffe 1. Die Schiebemuffe 1 ist im wesentlichen um die Rotationsachse 1 a rotationssymmetrisch ausgebildet und besteht aus einer Verzahnung 2 sowie einem Stützring 6. Die Verzahnung 2 ist durch einen kreisrund gebogenen Blechstreifen 3 gebildet, dessen Enden 3a und 3b aufeinander zu gebogen und mittels einer Schlossverbindung 4 aneinander befestigt sind. Die Figuren 3a bis 3c zeigen die Verzahnung 2 in einer vergrößerten und nicht maßstäblichen Darstellung des Details Z aus Figur 2 mit alternativ gestalteten Stützringen. Aus einer ringförmigen Basis 2a der Wandstärke B stehen radial Zähne 5 und 9 nach innen hervor. Der Zahn 5 weist eine Rastvertiefung 5a für den Eingriff eines nicht dargestellten Druckstückes auf. Die Zähne 5 und 9 sind mit den üblichen Merkmalen der Zähne von Schiebemuffen, wie Dachschrägen und hinterschnittenen Zahnflanken versehen. Der Stützring 6 aus Stahl ist kaltgeformt und umfangsseitig geschlossen ausgeführt. Dabei ist der Stützring 6 auf der Basis 2a befestigt.

Die Figuren 3b und 3c zeigen mit den im Querschnitt dargestellten Stützringen 10 bzw. 11 Alternativen zu dem Stützring 6. Jeder der Stützringe 6, 10, 11 weist einen ringförmigen Abschnitt 12 der Wanddicke T auf. Der Abschnitt 12 schließt stirnseitig, längs in beide Richtungen der Rotationsachse 1a, mit jeweils einer der Stirnseiten 2b der Verzahnung 2 ab. Die radiale Wanddicke T des Abschnitts 12 ist größer als die radiale Wandstärke B der Basis 2a. Der Stützring 6 sowie der Stützring 10 sind an der Schaltgabelführung 7 mit einer Ringnut 8 versehen. Der Stützring 11 weist eine Ringnut 13 auf. Die Ringnuten 8, 13 sind in den jeweiligen der kalt gewalzten Stützringe 6, 10 und 11 gewalzt. Die Seitenwände 8a der Ringnut 8 sind parallel zueinander ausgerichtet, während die Seitenwände 13a der Ringnut 13 jeweils um den Winkel α zu jeweils einer der Symmetrieebene 1b der Schiebemuffe 1 bzw. der Ringnut 13 parallelen Ebene 17 geneigt sind.

Der Stützring 6 ist mit einem Presssitz auf dem ringförmig gebogenen Blechstreifen 3 befestigt. Zusätzlich sind der Stützring 6 und die Verzahnung 2 an der Basis 2a mittels zwei umlaufender Schweißnähte 14 aneinander gesichert.

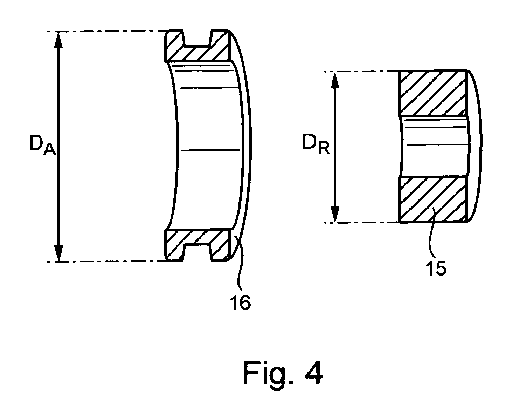

Der radial zwischen der Ringnut 8 bzw. 13 und der Basis 2a gelegene Abschnitt 12 weist eine radiale Wanddicke von mindestens 2,5 mm auf. Die radiale Wanddicke T des ringförmigen Abschnittes 12 entspricht außerdem mindestens dem 1,4-fachen Wert der geringsten radialen Wandstärke B der Basis 2a der Verzahnung 2. Die geringste radiale Wandstärke B der Basis 2a ist dabei die halbe Differenz aus dem kleinsten Außendurchmesser dₐ an dem ringförmig gebogenen Blechstreifen 3 und aus dem größten Durchmesser D_{F} des Fußkreises der Verzahnung 2. Die Zahnhöhe H der Zähne 5 und 9 ist mindestens so groß wie die geringste radiale Wandstärke B der ringförmigen Basis 2a. Die Zahnhöhe H ist die halbe Differenz aus dem größten Durchmesser des Fußkreises D_{F} und aus dem kleinsten Durchmesser D_{K} des Kopfkreises der Zähne 5 der Verzahnung 2. Figur 4 zeigt in vereinfachter Form die Abmessungen eines Rohlings 15 für die Herstellung eines Stützringes 16 im Vergleich zu dem fertigen Stützring 16. Der größte Außendurchmesser D_{R} des Rohlings 15 ist kleiner als der größte Außendurchmesser D_{A} des Stützringes 16.

### Bezugszeichen

- 1: Schiebemuffe
- 1a: Rotationsachse
- 1b: Symmetrieebene
- 2: Verzahnung
- 2a: Basis
- 2b: Stirnseite
- 3: Blechstreifen
- 3a: Ende
- 3b: Ende
- 4: Schlossverbindung
- 5: Zahn
- 5a: Rastvertiefung
- 6: Stützring
- 7: Schaltgabelführung
- 8: Ringnut
- 8a: Seitenwand
- 9: Zahn
- 10: Stützring
- 11: Stützring
- 12: Abschnitt
- 13: Ringnut
- 13a: Seitenwand
- 14: Schweißnaht
- 15: Rohling
- 16: Stützring
- 17: Ebene

## Patentansprüche

1. Schiebemuffe (1) mit einer durch Kaltumformen eines Blechstreifens (3) hergestellten Verzahnung (2) und mit einer Schaltgabelführung (7), wobei die Verzahnung (2) mit radial nach innen hervorstehenden Zähnen (5, 9) an einer ringförmigen Basis (2a) des ringförmig um eine Rotationsachse (1a) gebogenen Blechstreifens (3) ausgebildet ist und wobei die Schaltgabelführung (7) mit eine um die Rotationsachse (1a) sowie um die Basis (2a) verlaufenden Ringnut (8, 13) versehen ist, und die Schiebemuffe (1) einen einteiligen kaltgeformten sowie umfangsseitig geschlossenen Stützring (6, 10, 11) aus Stahl aufweist und die Schaltgabelführung (7) mit einer in den Stützring (6, 10, 11) geformten sowie radial nach außen geöffneten Ringnut (8, 13) versehen ist, **dadurch gekennzeichnet, dass** der Stützring (6, 10, 11) auf der Basis (2a) befestigt ist und dabei die Basis (2a) außen von einem ringförmigen Abschnitt (12) des Stützringes (6, 10, 11) mit einer konstanten Wanddicke zu mindestens 4/5 längs der Rotationsachse (1a) abgedeckt sowie umfangsseitig umgriffen ist und wobei die Wanddicke des Abschnitts (12) mindestens der größten radialen Wandstärke der Basis (2a) entspricht.

2. Schiebemuffe nach Anspruch 1, **dadurch gekennzeichnet, dass** der Stützring (16) aus einem ringförmigen Rohling (15) kaltgeformt ist, wobei der größte Außendurchmesser des Rohlings (15) zumindest kleiner als der kleinste Außendurchmesser an dem fertigen Stützring (16) ist.

3. Schiebemuffe nach Anspruch 1, **dadurch gekennzeichnet, dass** der Stützring (6) mittels eines Presssitzes auf dem ringförmig gebogenen Blechstreifen (3) befestigt ist.

4. Schiebemuffe nach Anspruch 3, **dadurch gekennzeichnet, dass** der Presssitz mit wenigstens einer Schweißnaht (14) gesichert ist.

5. Schiebemuffe nach Anspruch 1, **dadurch gekennzeichnet, dass** der Stützring (6, 10, 11) und der Blechstreifen (3) mittels wenigstes einer Schweißnaht (14) aneinander gesichert sind.

6. Schiebemuffe nach Anspruch 1, **dadurch gekennzeichnet, dass** die aufeinander zugeführten Enden (3a, 3b) des ringförmig um die Rotationsachse (1a) gebogenen Blechstreifens (3) aneinander befestigt sind.

7. Schiebemuffe nach Anspruch 1, **dadurch gekennzeichnet, dass** radial zwischen der Ringnut (8, 13) und der Basis (2a) ein ringförmiger Wandabschnitt (12) an dem Stützring (6, 10, 11) um die Rotationsachse (1a) umlaufend mit einer radialen Wandstärke von mindestens 2,5 mm verbleibt.

8. Schiebemuffe nach Anspruch 1, **dadurch gekennzeichnet, dass** radial zwischen der Ringnut (8, 13) und dem Blechstreifen (3) ein ringförmiger Wandabschnitt (12) an dem Stützring (6, 10, 11) verbleibt und dass die radiale Wanddicke des ringförmigen Wandabschnitts (12) um die Rotationsachse (1a) umlaufend mindestens dem 1,4-fachen Wert der geringsten radialen Wandstärke der Basis (2a) der Verzahnung (2) entspricht, wobei die geringste radiale Wandstärke der Basis (2) die halbe Differenz aus dem kleinsten Außendurchmesser an dem ringförmig gebogenen Blechstreifen (3) und aus dem größten Durchmesser des Fußkreises der Verzahnung (2) ist.

9. Schiebemuffe nach Anspruch 1, **dadurch gekennzeichnet, dass** die Zahnhöhe des höchsten Zahnes (5, 9) der Zähne (5, 9) mindestens so groß ist, wie die geringste radiale Wandstärke der ringförmigen Basis (2a) der Verzahnung (2), wobei die Zahnhöhe die halbe Differenz aus dem größten Durchmesser des Fußkreises und aus dem kleinsten Durchmesser des Kopfkreises der höchsten Zähne (5, 9) der Verzahnung (2) ist und wobei die geringste radiale Wanddicke der Basis (2a) die halbe Differenz aus dem kleinsten Außendurchmesser an dem ringförmig gebogenen Blechstreifen (3) und aus dem größten Durchmesser des Fußkreises der Verzahnung (2) ist.

10. Schiebemuffe nach Anspruch 9, **dadurch gekennzeichnet, dass** radial zwischen der Ringnut (8, 13) und dem Blechstreifen (3) ein ringförmiger Wandabschnitt (12) an dem Stützring (6, 10, 11) verbleibt und dass die radiale Wandstärke des ringförmigen Wandabschnittes (12) des Stützrings (6, 10, 11) um die Rotationsachse (1a) umlaufend mindestens dem 1,4-fachen Wert der geringsten radialen Wanddicke der Basis (2a) der Verzahnung (2) entspricht.

## Claims

1. Sliding sleeve (1) with a gearing (2) made by cold shaping of a sheet metal strip (3), and with a gearshift fork guide (7), the gearing (2) being configured with radially inwards projecting teeth (5, 9) on an annular base (2a) of the sheet metal strip (3) that is bent into an annular shape about an axis of rotation (1 a), and the gearshift fork guide (7) being provided with an annular groove (8, 13) that extends about the axis of rotation (1 a) and about the base (2a), said sliding sleeve (1) comprising a one-piece cold-shaped and peripherally dosed support ring (6, 10, 11) out of steel and the gearshift fork guide (7) being provided with an annular groove (8, 13) that is formed into the support ring (6, 10, 11) and is open radially outwards, **characterised in that** the support ring (6, 10, 11) is fixed on the base (2a), and at least 4/5 of the base (2a) is covered on the outside along the axis of rotation (1a) and is peripherally surrounded by an annular section (12) of the support ring (6, 10, 11) having a constant wall thickness, and the wall thickness of the section (12) corresponds to at least the largest radial wall thickness of the base (2a).

2. Sliding sleeve according to claim 1, **characterised in that** the support ring (16) is cold-shaped out of an annular blank (15), the largest outer diameter of the blank (15) being at least smaller than the smallest outer diameter on the finished support ring (16).

3. Sliding sleeve according to claim 1, **characterised in that** the support ring (6) is fixed by an interference fit on the annularly bent sheet metal strip (3).

4. Sliding sleeve according to claim 3, **characterised in that** the interference fit is secured by at least one weld seam (14).

5. Sliding sleeve according to claim 1, **characterised in that** the support ring (6, 10, 11) and the sheet metal strip (3) are secured to each other by at least one weld seam (14).

6. Sliding sleeve according to claim 1, **characterised in that** the brought-together ends (3a, 3b) of the sheet metal strip (3) bent annularly about the axis of rotation (1 a) are fixed to each other.

7. Sliding sleeve according to claim 1, **characterised in that** an annular wall section (12) on the support ring (6, 10, 11) extending continuously about the axis of rotation (1) and having a radial wall thickness of at least 2.5 mm remains radially between the annular groove (8, 13) and the base (2a).

8. Sliding sleeve according to claim 1, **characterised in that** an annular wall section (12) on the support ring (6, 10, 11) remains radially between the annular groove (8, 13) and the sheet metal strip (3), and that the radial wall thickness of the annular wall section (12) extending continuously about the axis of rotation (1 a) corresponds to at least 1.4 times the value of the smallest radial wall thickness of the base (2a) of the gearing (2), the smallest radial wall thickness of the base (2a) being equal to half the difference between the smallest outer diameter on the annularly bent sheet metal strip (3) and the largest diameter of the root circle of the gearing (2).

9. Sliding sleeve according to claim 1, **characterised in that** the tooth height of the highest tooth (5, 9) among the teeth (5, 9) is at least as large as the smallest radial wall thickness of the annular base (2a) of the gearing (2), the tooth height being equal to half the difference between the largest diameter of the root circle and the smallest diameter of the tip circle of the highest teeth (5, 9) of the gearing (2), and the smallest radial wall thickness of the base (2a) being equal to half the difference between the smallest outer diameter on the annularly bent sheet metal strip (3) and the largest diameter of the root circle of the gearing (2).

10. Sliding sleeve according to claim 9, **characterised in that** an annular wall section (12) on the support ring (6, 10, 11) remains radially between the annular groove (8, 13) and the sheet metal strip (3), and that the radial wall thickness of the annular wall section (12) of the support ring (6, 10, 11) extending continuously about the axis of rotation (1 a) corresponds to at least 1.4 times the value of the smallest radial wall thickness of the base (2a) of the gearing (2).

## Revendications

1. Manchon coulissant (1) ayant une denture (2) fabriquée à partir d'un feuillard en tôle (3) par formage à froid et un guide (7) de fourchette de changement de vitesse, la denture (2) étant configurée avec des dents (5, 9) faisant radialement saillie vers l'intérieur sur une base (2a) annulaire du feuillard en tôle (3) qui est cintré en forme annulaire autour d'un axe de rotation (1a), le guide (7) de fourchette de changement de vitesse étant muni d'une rainure annulaire (8, 13) qui s'étend autour de l'axe de rotation (1 a) et autour de la base (2a), ledit manchon coulissant (1) comprenant un anneau de support (6, 10, 11) monobloc formé à froid en acier et fermé en direction périphérique, et ledit guide (7) de fourchette de changement de vitesse étant muni d'une rainure annulaire (8, 13) qui est formée dans l'anneau de support (6, 10, 11) en étant ouverte radialement vers l'extérieur, **caractérisé en ce que** l'anneau de support (6, 10, 11) est fixé sur la base (2a) et que la base (2a) est recouverte à l'extérieur, à au moins 4/5, le long de l'axe de rotation (1a) et est entourée en direction périphérique par une section annulaire (12) de l'anneau de support (6, 10, 11) ayant une épaisseur de paroi constante, l'épaisseur de paroi de la section (12) correspondant à, au moins, la plus grande épaisseur radiale de paroi de la base (2a).

2. Manchon coulissant selon la revendication 1, **caractérisé en ce que** l'anneau de support (16) est formé à froid à partir d'une ébauche annulaire (15), le plus grand diamètre extérieur de l'ébauche (15) étant, au moins, inférieur au plus petit diamètre extérieur sur l'anneau de support (16) fini.

3. Manchon coulissant selon la revendication 1, **caractérisé en ce que** l'anneau de support (6) est fixé par ajustement serré sur le feuillard en tôle (3) cintré en forme annulaire.

4. Manchon coulissant selon la revendication 3, **caractérisé en ce que** l'ajustement serré est sécurisé par au moins une soudure (14).

5. Manchon coulissant selon la revendication 1, **caractérisé en ce que** l'anneau de support (6, 10, 11) et le feuillard en tôle (3) sont sécurisés, l'un sur l'autre, par au moins une soudure (14).

6. Manchon coulissant selon la revendication 1, **caractérisé en ce que** les extrémités (3a, 3b) réunies du feuillard en tôle (3) qui est cintré en forme annulaire autour de l'axe de rotation (1 a) sont fixées, l'une à l'autre.

7. Manchon coulissant selon la revendication 1, **caractérisé en ce que**, une section annulaire (12) de paroi sur l'anneau de support (6, 10, 11), qui s'étend de manière continue autour de l'axe de rotation (1a) et a une épaisseur radiale de paroi d'au moins 2,5 mm, reste radialement entre la rainure annulaire (8, 13) et la base (2a).

8. Manchon coulissant selon la revendication 1, **caractérisé en ce que**, une section annulaire (12) de paroi sur l'anneau de support (6, 10, 11) reste radialement entre la rainure annulaire (8, 13) et le feuillard en tôle (3), et que l'épaisseur radiale de paroi de la section annulaire (12) de paroi qui s'étend autour de l'axe de rotation (1a) correspond à au moins 1,4 fois la valeur de la plus petite épaisseur radiale de paroi de la base (2a) de la denture (2), la plus petite épaisseur radiale de paroi de la base (2a) étant égale à la moitié de la différence entre le plus petit diamètre extérieur sur le feuillard en tôle (3) cintré en forme annulaire et le plus grand diamètre extérieur du cercle de pied de la denture (2).

9. Manchon coulissant selon la revendication 1, **caractérisé en ce que** la hauteur de dent de la plus haute dent (5, 9) parmi les dents (5, 9) est au moins aussi grande que la plus petite épaisseur radiale de paroi de la base annulaire (2a) de la denture (2), la hauteur de dent étant égale à la moitié de la différence entre le plus grand diamètre du cercle de pied et le plus petit diamètre du cercle de tête des plus hautes dents (5, 9) de la denture (2), et la plus petite épaisseur radiale de paroi de la base (2a) étant égale à la moitié de la différence entre le plus petit diamètre extérieur sur le feuillard en tôle (3) cintré en forme annulaire et le plus grand diamètre extérieur du cercle de pied de la denture (2).

10. Manchon coulissant selon la revendication 9, **caractérisé en ce que**, une section annulaire (12) de paroi sur l'anneau de support (6, 10, 11) reste radialement entre la rainure annulaire (8, 13) et le feuillard en tôle (3), et que l'épaisseur radiale de paroi de la section annulaire (12) de paroi de l'anneau de support (6, 10, 11) qui s'étend autour de l'axe de rotation (1 a) correspond à au moins 1,4 fois la valeur de la plus petite épaisseur radiale de paroi de la base (2a) de la denture (2).
